# EUROPÄISCHE PATENTSCHRIFT

(11) **EP 1 917 456 B1**
(45) Veröffentlichungstag und Bekanntmachung des Hinweises auf die Patenterteilung: **05.10.2011**
(21) Anmeldenummer: 06776953.9
(22) Anmeldetag: 18.08.2006
(51) Int. Cl.: F16F 9/512, F16F 9/32

(54) **SCHWINGUNGSDÄMPFER**
VIBRATION DAMPER
AMORTISSEUR DE VIBRATIONS

(30) Priorität: 24.08.2005 DE 102005040284
(43) Veröffentlichungstag der Anmeldung: 07.05.2008
(73) Patentinhaber: ZF Friedrichshafen AG, 88046 Friedrichshafen (DE)
(72) Erfinder: ZEISSNER, Bernd, 97332 Volkach/Gaibach (DE); FOERSTER, Andreas, 97422 Schweinfurt (DE); GUNDERMANN, Frank, 97453 Marktsteinach (DE); HEYN, Steffen, 97464 Niederwerrn (DE); KRAWCZYK, Anton, 51570 Windeck (DE); BOECKER, Uwe, 53797 Lohmar (DE); THEIN, Thomas, 97526 Sennfeld (DE); BREUN, Wolfgang, 97464 Niederwerrn (DE); BIES, Herbert, 53501 Grafschaft/Vettelhoven (DE); BEYER, Holger, 96176 Pfarrweisach (DE); GAMPL, Ludwig, 97523 Schwanfeld (DE); GILSDORF, Heinz-Joachim, 97499 Donnersdorf (DE); SAUER,Klaus, 97520 Röthlein (DE)
(86) Internationale Anmeldenummer: PCT/EP2006/008158
(87) Internationale Veröffentlichungsnummer: WO 2007/022921

(56) Entgegenhaltungen:
- EP-A1- 1 484 526
- DE-A1- 2 230 975
- US-A1- 2003 051 957

## Beschreibung

### Technisches Gebiet

Die Erfindung betrifft einen Schwingungsdämpfer gemäß dem Oberbegriff von Patentanspruch 1.

### Stand der Technik

Aus der DE 100 41 199 C1 ist der gattungsbildende Schwingungsdämpfer bekannt. Funktional erfüllt dieses Konstruktionsprinzip die Aufgabe hochfrequente, kleinamplitudige Anregungen auszufiltern und damit einen Komfortvorteil im Vergleich zu einem konventionellen Schwingungsdämpfer zu bieten. Ein erster Kolben ist fest mit der Kolbenstange verbunden. Der zweite Kolben gleitet auf der Kolbenstange und wird von zwei Federn gestützt, von denen eine Stützfeder am ersten Kolben und eine zweite Stützfeder an einem Federteller anliegt, der wiederum von einem Sicherungsring gehalten wird. Die Ventilscheiben werden von den Stützfedern auf den zweiten Kolben vorgespannt, die auch gegen die Axialbewegung des zweiten Kolbens wirken. Daraus ergibt sich einerseits eine komplizierte Montage und andererseits eine Abhängigkeit der Ventilscheibenvorspannung zur Axialkraftunterstützung des zweiten Kolbens..

Aus der JP 10-339 345 A ist ein Schwingungsdämpfer bekannt, in dessen Zylinder eine Kolbenstange axial beweglich geführt ist. An der Kolbenstange ist ein erster Kolben ortsfest und ein zweiter Kolben in Grenzen axial beweglich angeordnet. Der zweite Kolben verfügt über elastische Ventilscheiben und kann gegen die Federkraft von Federn eine axiale Verschiebebewegung ausführen. Der Zylinder weist einen kolbenstangenseitigen und einen kolbenstangenfernen sowie einen Arbeitsraum zwischen den beiden Kolben auf, wobei ventilbestückte Durchlassöffnungen eine Verbindung zwischen den Arbeitsräumen steuern. Auch diese Konstruktion enthält keine vormontierbare Baueinheit für den zweiten Kolben mit seinen Federn.

Aus der EP 1 484 526 A1 ist ein Schwingungsdämpfer bekannt, der einen einzigen zur Kolbenstange axial beweglichen Kolben aufweist, der beidseitig mit Ventilscheiben bestückt ist. Die Ventilscheiben sind zusammen mit dem Kolben auf einer Spannhülse gefädelt und werden in einer Verspannungskette zwischen zwei Flanschen gehalten.

### Darstellung der Erfindung

Aufgabe der vorliegenden Erfindung ist es, den gattungsbildenden Schwingungsdämpfer derart weiterzuentwickeln, dass der zweite Kolben einerseits einfach montierbar ist und andererseits die Ventilscheibenvorspannung unabhängig von den Axialkräften der Stützfedern ausgeführt ist.

Erfindungsgemäß wird die Aufgabe durch die Merkmale des Patentanspruchs 1.

Der große Vorteil besteht darin, dass nicht nur eine handhabbare Baueinheit mit dem zweiten Kolben vorliegt, sondern auch die Einstellung der Federanordnung gezielt auf eine gewünschte Dämpfkraftkennlinie des zweiten Kolbens möglich ist.

Gemäß einem vorteilhaften Unteranspruch bildet der mindestens eine Federteller mit der Fixierhülse eine Presspassung. Im Vergleich zu einer Gewindeverbindung liegt ein erheblicher Kosten- und Montagevorteil vor, insbesondere weil man keinen Aufwand für eine Gewindesicherung betreiben muss. Die Presspassung muss keine sonderlich großen Axialkräfte aufnehmen, da man nur die Dämpfkraft des zweiten Kolbens abstützen muss. Es besteht auch noch die Möglichkeit, dass man die Stützfedern außenseitig bezogen auf die Baueinheit an dem mindestens einen Federteller anliegen lassen kann, so dass diese einen großen Teil der auf den Federteller wirksamen Axialkraft übernehmen können.

Bei einer Ausführungsform weist die Fixierhülse einen in Abzugrichtung wirkenden Endanschlag für einen Federteller auf, der von der Federanordnung des zweiten Kolbens gegen diesen Endanschlag vorgespannt wird. Es ist z. B. möglich, dass ein Endbereich der Fixierhülse zumindest auf einem Umfangsbereich abgewinkelt ist.

Die Fixierhülse im Außendurchmesser ist mehrfach gestuft ausgeführt und bildet mit einem Außendurchmesserbereich eine Presspassung mit dem zweiten Kolben. Aus Kostengründen ist eine spanlos gezogene Fixierhülse sinnvoll, wobei sich durch die Stufung der Fixierhülse eventuelle Formabweichungen weniger stark auswirken.

Des Weiteren kann man vorsehen, dass der Federteller mit der Fixierhülse einteilig ausgeführt ist. Die Einstellbarkeit der Federanordnung wird einfach durch eine Axialverschiebung der Fixierhülse zum zweiten Kolben erreicht.

Bei einer weiteren vorteilhaften Variante umfasst die Fixierhülse axial mindestens zwei Fixierhülsenteile, wobei mindestens ein Federteller mit einem Fixierhülseteil einteilig ausgeführt ist.

Dabei überlappen sich die mindestens zwei Fixierhülsenteile axial. Zur Einstellung der Federanordnungen schiebt man die mindestens zwei Fixierhülsenteile einfach mehr oder weniger ineinander, wobei die mindestens zwei Fixierhülsenteile gemäß einem vorteilhaften Unteranspruch eine Presspassung bilden.

Des Weiteren zeichnet sich eine Ausführungsform dadurch aus, dass der zweite Kolben mit der Fixierhülse oder einem Fixierhülsenteil einteilig ausgeführt ist.

### Kurze Beschreibung der Zeichnungen

Anhand der folgenden Figurenbeschreibung soll die Erfindung näher erläutert werden.

Es zeigt:
- Fig. 1: Kolbenstange mit einem ersten Kolben und einem zweiten axial beweglichen Kolben in einer beispielhaften Darstellung
- Fig. 2: Baueinheit nach Fig. 1 als Einzelteil
- Fig. 3 - 5: Alternative Ausführungen einer Baueinheit mit einteiliger Fixierhülse
- Fig. 6 u. 7: Baueinheit mit axial mehrteiliger Fixierhülse

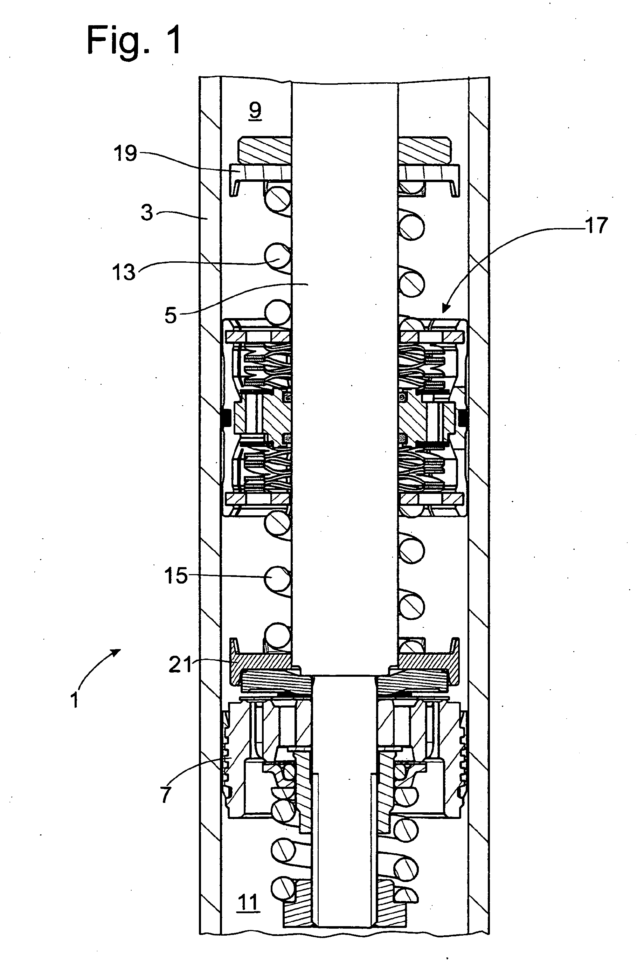

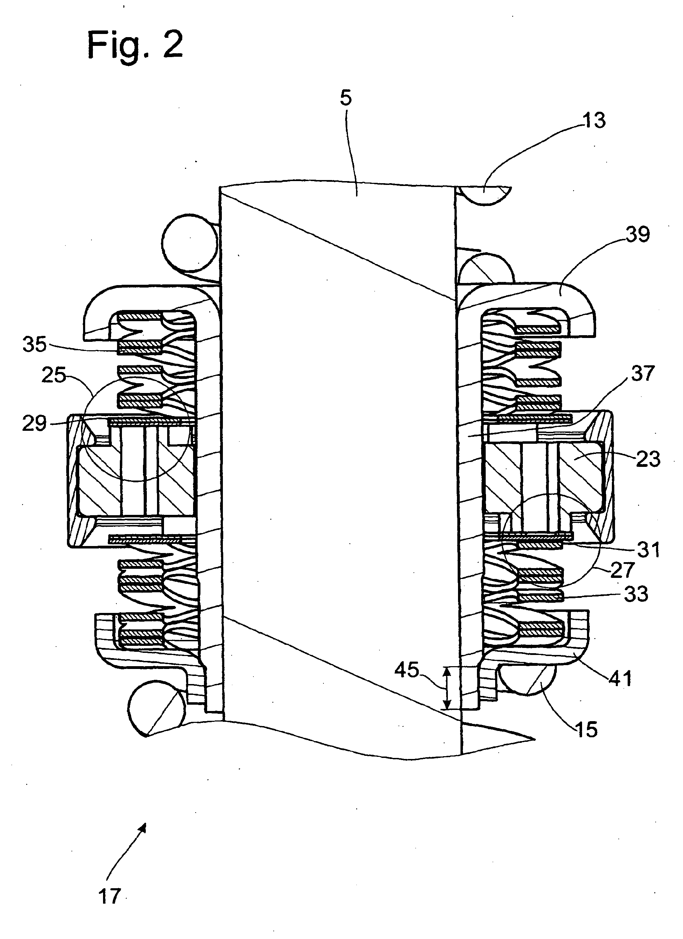

Die Fig. 1 zeigt einen Ausschnitt aus einem Schwingungsdämpfer 1 mit einem dämpfmediumgefüllten Zylinder 3, in dem eine Kolbenstange 5 axial beweglich geführt ist. An der Kolbenstange 5 ist ein erster Kolben 7 axial befestigt. Dieser Kolben 7 unterteilt den Zylinder in einen kolbenstangenseitigen Arbeitsraum 9 und einen kolbenstangenfernen Arbeitsraum 11. Der Aufbau und die Funktion des Kolbens 7 sind allgemein bekannt. Ergänzend wird auf die DE 34 45 684 A1, Fig. 2, verwiesen

Im kolbenstangenseitigen Arbeitsraum 9 sind auf der Kolbenstange 5 zwei Stützfedern 13; 15 angeordnet, deren Stützkräfte entgegengesetzt gerichtet auf eine Baueinheit 17 wirken, die in Fig. 2 als Einzelteil dargestellt ist. Jede Stützfeder 13; 15 liegt endseitig an einer Stützringscheibe 19; 21 an, die ortsfest zur Kolbenstange 5 ausgeführt sind. Bei einer Kolbenstangebewegung kann sich die Baueinheit 17 gegen die Kräfte der Stützfedern 13; 15 axial zum ersten Kolben 7 verschieben.

Die Fig. 2 zeigt die Baueinheit 17, die einen zweiten Kolben 23 aufweist. Der zweite Kolben 23 verfügt über Dämpfventile 25; 27, mit Ventilscheiben 29; 31, die jeweils von Federanordnungen 33; 35 in der Bauform von Wellfedern vorgespannt sind. Die Anzahl und die Form der Federn der Federanordnungen 33; 35 können beliebig von der dargestellten Fig. 2 abweichen.

Der zweite Kolben wird von einer Fixierhülse 37 gehalten, die endseitig jeweils einen Federteller 39; 41 für die Federanordnungen 33; 35 aufweist. Zwischen der Fixierhülse 37 und dem kreisringförmigen Kolben 23 besteht eine Presspassung. In Richtung der Stützfeder 13 ist der Federteller 39 mit der Fixierhülse 37 einteilig ausgeführt. Ausgehend von dem Außendurchmesserbereich für die Presspassung mit dem Kolben ist die Fixierhülse 37 mehrfach gestuft ausgeführt und bildet mit dem Federteller 41 eine Presspassung.

Bei der Montage wird die Federanordnung 35 zusammen mit mindestens einer Ventilscheibe 29 auf die Fixierhülse 37 gefädelt. Anschließend schiebt man den zweiten Kolben 23 auf die Fixierhülse und stellt den Verschiebeweg so ein, dass die Federanordnung 35 die gewünschte Federkraft aufweist. Danach fügt man die Ventilscheibe 31 und die Federanordnung 33 hinzu. In einem abschließenden Arbeitsschritt wird der Federteller 41 auf die Fixierhülse 37 geschoben, bis auch für die Federanordnung 33 die korrekte Vorspannung vorliegt. Die Fixierhülse verfügt über einen Absatz mit Verschiebeweg 45, der größer ist als die axiale Erstreckung des Federtellers auf der Fixierhülse.

Die Presspassung zwischen dem Federteller 41 und der Fixierhülse 37 muss ausgehend von der Federanordnung 33 keine allzu großen Axialkräfte aufnehmen, da die Stützfeder 15 rückseitig am Federteller 41 anliegt.

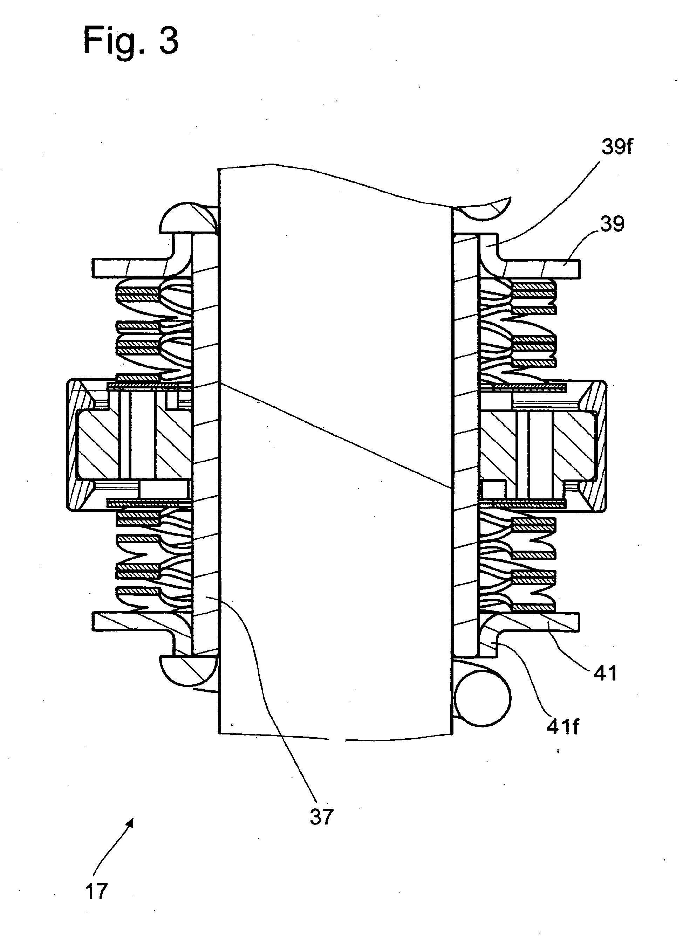

In der Variante nach Fig. 3 kommen innerhalb der Baueinheit 17 zwei spiegelbildlich angeordnete Federteller 39; 41 zur Anwendung, die im Halbschnitt einen Winkelquerschnitt aufweisen. Die Federteller bilden mit ihrem Führungsabschnitt 39f; 41 f, die Presspassung mit der Fixierhülse 37, wobei eine zusätzliche Sicherung mittels einer Verschweißung denkbar ist.

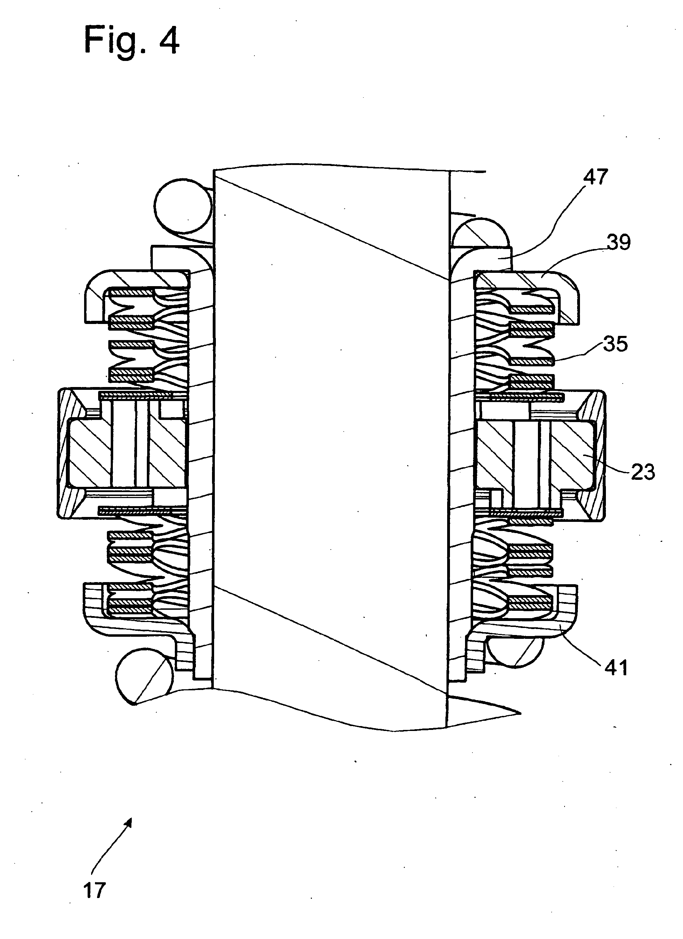

Die Variante der Baueinheit 17 gemäß der Fig. 4 ist in dem Bereich zwischen dem zweiten Kolben 23 und dem Federteller 41 identisch mit der Fig. 2. Als alternative Möglichkeit zur Befestigung des Federtellers 39, der im Vollschnitt einen u-förmigen Querschnitt aufweist, dient ein in Abzugrichtung wirkender Endanschlag 47, gegen den der Federteller 39 von der Federanordnung 35 vorgespannt wird. Der Endanschlag 47 wird von einem abgewinkelten Umfangsbereich der Fixierhülse gebildet.

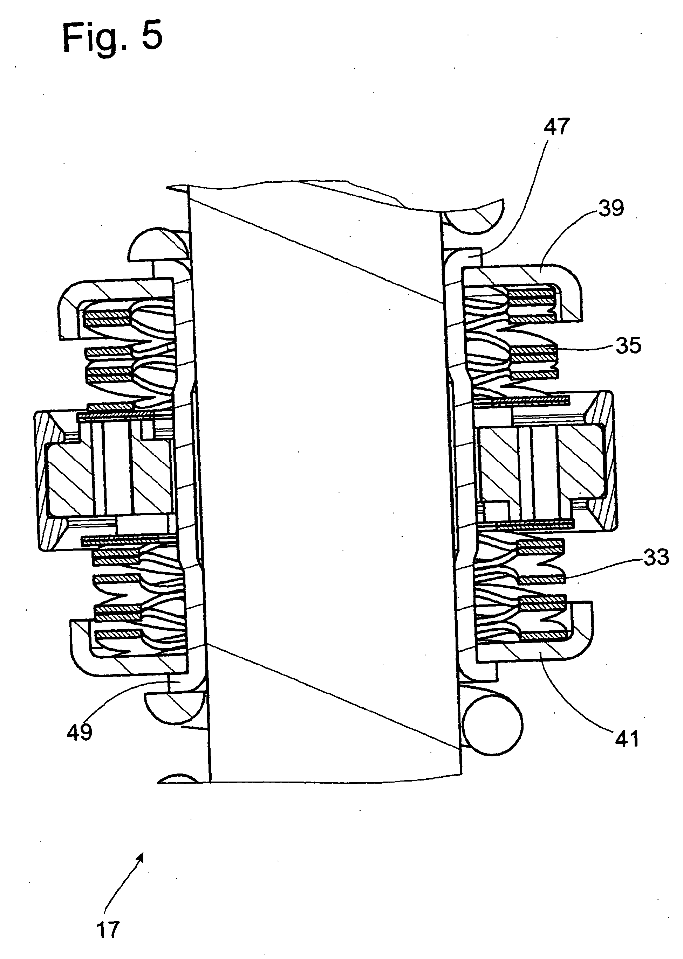

Ergänzend zeigt die Fig. 5 bei einer Baueinheit 17, dass ein u-förmiger Federteller 39; 41 für beide Federanordnungen 35; 33 verwendbar ist. Dazu sind beide Endbereiche der Fixierhülse mit einem Endanschlag 47; 49 ausgeführt.

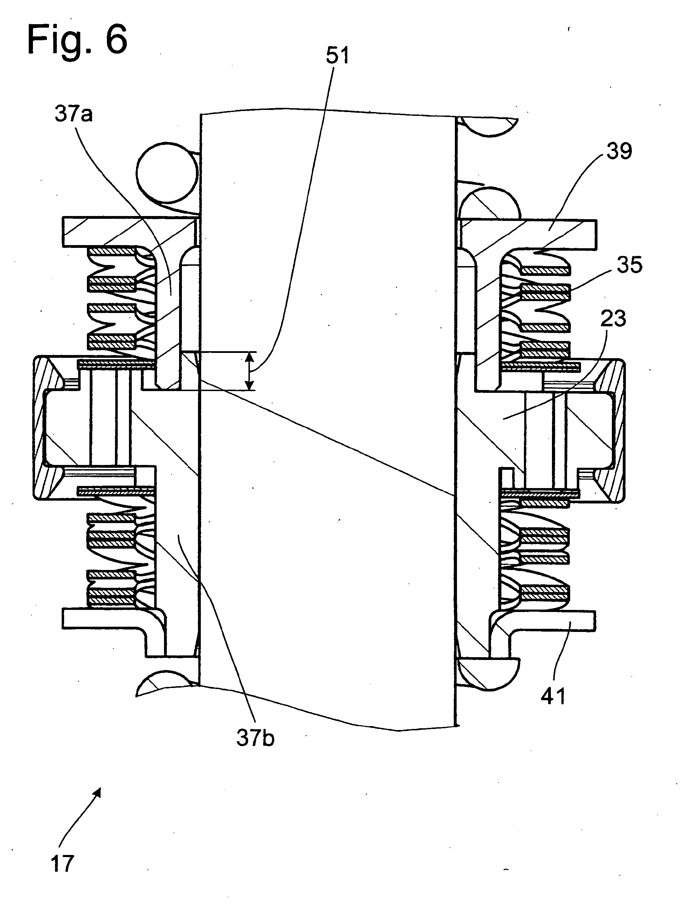

Die Baueinheit 17 nach Fig. 6 verfügt über eine Fixierhülse, die zwei Fixierhülsenteile 37a; 37b umfasst, wobei der Federteller 39 mit dem Fixierhülsenteil 37a einteilig ausgeführt ist. Die beiden Fixierhülsenteilen 37a; 37b überlappen sich axial und bilden im Überlappungsbereich eine Presspassung, wobei über die Länge der Überlappung 51 die Vorspannung der Federanordnung 35 einstellbar ist. Der zweite Kolben 23 kann mit dem Führungshülsenteil 37b als ein gemeinsames Bauteil ausgeführt sein. Die Ausgestaltung des Federtellers 41 bzw. des Endbereichs des Führungshülsenteils 37b kann auch nach den Varianten gemäß den Fig. 2 bis 5 erfolgen.

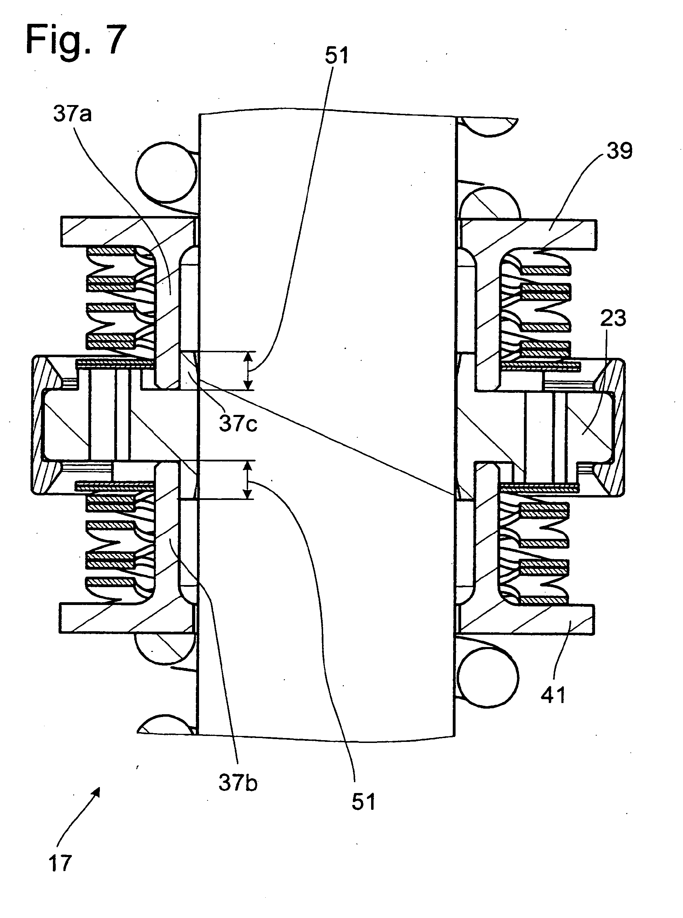

Die Fig. 7 zeigt zur Fig. 6 eine Abwandlung einer Baueinheit 17, bei der funktional eine dreiteilige Fixierhülse vorliegt. Die Fixierhülsenteile 37a und 37b mit den Federtellern 39; 41 können als Gleichteile vorgesehen sein. Am zweiten Kolben 23 ist am Innendurchmesser als Führungshülsenteil beidseitig eine Nabe 37c ausgeführt, die mit den Innendurchmessern der Fixierhülsenteile 37a; 37b eine Überlappung 51 in Verbindung mit einer Presspassung eingeht.

## Patentansprüche

1. Schwingungsdämpfer (1), umfassend einen Zylinder (3), in dem eine Kolbenstange (5) axial beweglich geführt ist, wobei an der Kolbenstange (5) ein erster Kolben (7) ortsfest und ein zweiter, beidseitig mit mindestes einer mittels einer Federanordnung vorgespannten Ventilscheibe bestückter Kolben (23) gegen eine Federkraft von mindestens einer Stützfeder (13,15) axial verschiebbar gelagert ist, wobei die Federanordnung mindestes einen Federteller (39,41) aufweist, an dem sich die Federanordnung abstützt,
**dadurch gekennzeichnet,**
**dass** der zweite Kolben (23) zusammen mit einer Fixierhülse (37; 37a; 37b; 37c) und dem mindestens einen Federteller (39; 41) für die Federanordnung (33; 35) eine Baueinheit (17) bilden, wobei der zweite Kolben unabhängig von dem mindestens einen Federteller zur Fixierhülse fixiert ist und der mindestens eine Federteller (39; 41) zur Einstellung der Vorspannung der Federanordnung (33; 35) axial verschiebbar zur Fixierhülse (37; 37a; 37b; 37c) gelagert und in der gewünschten Axialposition fixierbar ist.

2. Schwingungsdämpfer nach Anspruch 1,
**dadurch gekennzeichnet,**
**dass** der mindestens eine Federteller (39; 41) mit der Fixierhülse (37) eine Presspassung bildet.

3. Schwingungsdämpfer nach Anspruch 2,
**dadurch gekennzeichnet,**
**dass** die Fixierhülse (37) einen in Abzugrichtung wirkenden Endanschlag (47) für einen Federteller (39; 41) aufweist und dieser Federteller (39; 41) von der Federanordnung (33; 35) des zweiten Kolbens (23) gegen diesen Endanschlag (47; 49) vorgespannt wird.

4. Schwingungsdämpfer nach Anspruch 3,
**dadurch gekennzeichnet,**
**dass** ein Endbereich der Fixierhülse (37) zumindest auf einem Umfangsbereich abgewinkelt ist.

5. Schwingungsdämpfer nach Anspruch 1,
**dadurch gekennzeichnet,**
**dass** die Fixierhülse (37) im Außendurchmesser mehrfach gestuft ausgeführt ist und mit einem Außendurchmesserbereich eine Presspassung mit dem zweiten Kolben (23) bildet.

6. Schwingungsdämpfer nach Anspruch 1,
**dadurch gekennzeichnet,**
**dass** der Federteller (39; 41) mit der Fixierhülse (37) einteilig ausgeführt ist.

7. Schwingungsdämpfer nach Anspruch 1,
**dadurch gekennzeichnet,**
**dass** die Fixierhülse axial mindestens zwei Fixierhülsenteile (37a; 37b) umfasst, wobei mindestens ein Federteller (39; 41) mit einem Fixierhülseteil (37a; 37b) einteilig ausgeführt ist.

8. Schwingungsdämpfer nach Anspruch 7,
**dadurch gekennzeichnet,**
**dass** sich die mindestens zwei Fixierhülsenteile (37a; 37b; 37c) axial überlappen.

9. Schwingungsdämpfer nach Anspruch 8,
**dadurch gekennzeichnet,**
**dass** die mindestens zwei Fixierhülsenteile (37a; 37b; 37c) eine Presspassung bilden.

10. Schwingungsdämpfer nach einem der Ansprüche 1 - 9,
**dadurch gekennzeichnet,**
**dass** der zweite Kolben (23) mit der Fixierhülse (37) oder einem Fixierhülsenteil (37a; 37b); 37c) einteilig ausgeführt ist.

## Claims

1. Vibration damper (1), comprising a cylinder (3) in which a piston rod (5) is guided axially movably, a first piston (7) being mounted fixedly on the piston rod (5), and a second piston (23), equipped on both sides with at least one valve disc prestressed by means of a spring arrangement, being mounted on the said piston rod so as to be axially displaceable counter to a spring force of at least one supporting spring (13, 15), the spring arrangement having at least one spring plate (39, 41) on which the spring arrangement is supported, **characterized in that** the second piston (23), together with a fixing sleeve (37; 37a; 37b; 37c) and with the at least one spring plate (39; 41) for the spring arrangement (33; 35), form a structural unit (17), the second piston being fixed with respect to the fixing sleeve independently of the at least one spring plate, and the at least one spring plate (39; 41) being mounted so as to be axially displaceable with respect to the fixing sleeve (37; 37a; 37b; 37c) for the purpose of setting the prestress of the spring arrangement (33; 35), and the said spring plate being fixable in the desired axial position.

2. Vibration damper according to Claim 1, **characterized in that** the at least one spring plate (39; 41) forms a press fit with the fixing sleeve (37).

3. Vibration damper according to Claim 2, **characterized in that** the fixing sleeve (37) has a limit stop (47) for a spring plate (39; 41), the said limit stop acting in the pull-off direction, and this spring plate (39; 41) is prestressed against this limit stop (47; 49) by the spring arrangement (33; 35) of the second piston (23) .

4. Vibration damper according to Claim 3, **characterized in that** an end region of the fixing sleeve (37) is angled at least on a circumferential region.

5. Vibration damper according to Claim 1, **characterized in that** the fixing sleeve (37) is designed in outside diameter with multiple steps, and with an outside-diameter region forms a press fit with the second piston (23).

6. Vibration damper according to Claim 1, **characterized in that** the spring plate (39; 41) is produced in one part with the fixing sleeve (37).

7. Vibration damper according to Claim 1, **characterized in that** the fixing sleeve comprises axially at least two fixing-sleeve parts (37a; 37b), at least one spring plate (39; 41) being produced in one part with a fixing-sleeve part (37a; 37b).

8. Vibration damper according to Claim 7, **characterized in that** the at least two fixing-sleeve parts (37a; 37b; 37c) overlap one another axially.

9. Vibration damper according to Claim 8, **characterized in that** the at least two fixing-sleeve parts (37a; 37b; 37c) form a press fit.

10. Vibration damper according to one of Claims 1-9, **characterized in that** the second piston (23) is produced in one part with the fixing sleeve (37) or with a fixing-sleeve part (37a; 37b; 37c).

## Revendications

1. Amortisseur de vibrations (1), comprenant un cylindre (3) dans lequel est guidée, de manière déplaçable axialement, une tige de piston (5), un premier piston (7) étant monté fixement sur la tige de piston (5) et un deuxième piston (23), muni des deux côtés d'au moins un disque de soupape précontraint au moyen d'un agencement de ressort étant monté de manière déplaçable axialement à l'encontre de la force de ressort d'au moins un ressort de support (13, 15), l'agencement de ressort présentant au moins une coupelle de ressort (39, 41) sur laquelle s'appuie l'agencement de ressort,
**caractérisé en ce que**
le deuxième piston (23), conjointement avec une douille de fixation (37 ; 37a ; 37b ; 37c) et l'au moins une coupelle de ressort (39 ; 41) pour l'agencement de ressort (33 ; 35) forment une unité constructive (17), le deuxième piston étant fixé indépendamment de l'au moins une coupelle de ressort à la douille de fixation et l'au moins une coupelle de ressort (39 ; 41), pour l'ajustement de la précontrainte de l'agencement de ressort (33 ; 35) étant montée de manière déplaçable axialement par rapport à la douille de fixation (37 ; 37a ; 37b ; 37c) et pouvant être fixée dans la position axiale souhaitée.

2. Amortisseur de vibrations selon la revendication 1,
**caractérisé en ce que**
l'au moins une coupelle de ressort (39 ; 41) forme avec la douille de fixation (37) un ajustement serré.

3. Amortisseur de vibrations selon la revendication 2,
**caractérisé en ce que**
la douille de fixation (37) présente une butée de fin de course (47) agissant dans la direction d'extraction pour une coupelle de ressort (39 ; 41), et cette coupelle de ressort (39 ; 41) est précontrainte par l'agencement de ressort (33 ; 35) du deuxième piston (23) contre cette butée de fin de course (47 ; 49).

4. Amortisseur de vibrations selon la revendication 3,
**caractérisé en ce**
**qu'**une région d'extrémité de la douille de fixation (37) est coudée au moins sur une région périphérique.

5. Amortisseur de vibrations selon la revendication 1,
**caractérisé en ce que**
la douille de fixation (37) est réalisée dans son diamètre extérieur avec plusieurs étages, et forme avec une région de diamètre extérieur un ajustement serré avec le deuxième piston (23).

6. Amortisseur de vibrations selon la revendication 1,
**caractérisé en ce que**
la coupelle de ressort (39 ; 41) est réalisée d'une seule pièce avec la douille de fixation (37) .

7. Amortisseur de vibrations selon la revendication 1,
**caractérisé en ce que**
la douille de fixation comprend axialement au moins deux parties de douille de fixation (37a ; 37b), au moins une coupelle de ressort (39 ; 41) étant réalisée d'une seule pièce avec une partie de douille de fixation (37a ; 37b).

8. Amortisseur de vibrations selon la revendication 7,
**caractérisé en ce que**
les au moins deux parties de douille de fixation (37a ; 37b ; 37c) se chevauchent.

9. Amortisseur de vibrations selon la revendication 8,
**caractérisé en ce que**
les au moins deux parties de douille de fixation (37a ; 37b ; 37c) forment un ajustement serré.

10. Amortisseur de vibrations selon l'une quelconque des revendications 1 à 9,
**caractérisé en ce que**
le deuxième piston (23) est réalisé d'une seule pièce avec la douille de fixation (37) ou une partie de douille de fixation (37a ; 37b ; 37c).
